(19) **Europäisches Patentamt / European Patent Office / Office européen des brevets**

(11) **EP 4 759 645 A1**

(12) **EUROPEAN PATENT APPLICATION**
published in accordance with Art. 153(4) EPC

(43) Date of publication:
**17.06.2026 Bulletin 2026/25**

(51) International Patent Classification (IPC):
**B60R 25/40** (2013.01)     **B60R 25/01** (2013.01)
**B60R 25/24** (2013.01)

(21) Application number: **24852074.4**

(22) Date of filing: **02.07.2024**

(52) Cooperative Patent Classification (CPC):
**B60R 25/01; B60R 25/24; B60R 25/40**

(86) International application number:
**PCT/KR2024/009286**

(87) International publication number:
**WO 2025/033718 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023 KR 20230103247**

(71) Applicant: **LG INNOTEK CO. LTD
Gangseo-gu
Seoul 07796 (KR)**

(72) Inventors:
• **KIM, Jang Seob**
  **Seoul 07796 (KR)**
• **BAE, Sung Jun**
  **Seoul 07796 (KR)**
• **KANG, Chang Yeub**
  **Seoul 07796 (KR)**

(74) Representative: **Plasseraud IP
104 Rue de Richelieu
CS92104
75080 Paris Cedex 02 (FR)**

(54) **VEHICLE DOOR OPENING/CLOSING DEVICE AND SYSTEM**

(57) Provided according to an embodiment is a vehicle door opening/closing device comprising: a communication unit which communicates with a portable device including a digital key; a control unit which outputs an opening/closing control signal for controlling opening/closing of a door of a vehicle by using a signal received from the portable device through the communication unit; a door opening/closing module which locks or unlocks the door of the vehicle according to the opening/closing control signal; and a wireless charging module which, when a battery for supplying power to the vehicle is discharged, wirelessly receives power from the portable device and supplies power for opening/closing the door of the vehicle.

FIG. 7

## Description

[Technical Field]

Embodiments relate to a vehicle door opening/-closing device and system.

[Background Art]

To provide local-based services (LBS), technologies, such as Global Positioning System (GPS), Wi-Fi, Bluetooth, etc., are being used, and these technologies have limitations in achieving precise positioning, but there are advantages in that an ultra-wideband (UWB) technology (6 to 8 GHz and a bandwidth of 500 MHz or more) provides a wide frequency spectrum and low-power communication and enables high-accuracy positioning within an error range of several tens of centimeters.

Conventional GPS and mobile network-based position tracking technologies have error ranges of 5 to 50 meters and 50 to 200 meters, respectively, and in the case of GPS, in dense urban areas, obstacles can occur in the reception of signals transmitted from satellites.

Low-cost position tracking is possible in the case of Wi-Fi, but its frequency band is narrow, and thus there is a limit for channel splitting when the number of tracking targets increases. In addition, mobile devices can be disconnected from fixed Wi-Fi access points (APs).

The cost-effective deployment of multiple sensors is possible in the case of Bluetooth, but its high communication latency is high, and thus it is unsuitable for real-time position tracking in dynamic environments.

UWB uses a time of flight (TOF) technology to calculate a distance between communicating entities by multiplying signal arrival time between the communicating entities by the speed of light.

UWB uses a TOF technology in a frequency of 6 to 8 GHz with a bandwidth of 500 MHz or more to calculate a distance between communicating entities by multiplying a signal arrival time between the communicating entities by the speed of light.

Unlike Wi-Fi and Bluetooth, UWB uses a wide frequency bandwidth and can transmit a large amount of data at high data transmission rates while consuming low power.

However, when a digital key is used without a physical key, there is a problem that vehicle doors cannot be unlocked and a vehicle cannot be controlled when the vehicle battery is discharged.

[Detailed Description of Invention]

[Technical Problem]

The present invention is directed to providing a vehicle door opening/closing device and system capable of supplying minimum operating power required to control a vehicle using a portable device when a vehicle battery is discharged.

[Technical Solution]

According to an embodiment, there is provided a vehicle door opening/closing device including a communication unit configured to communicate with a portable device including a digital key, a control unit configured to output an opening/closing control signal for controlling opening/closing of a door of a vehicle using a signal received from the portable device through the communication unit, a door opening/closing module configured to lock or unlock the door of the vehicle according to the opening/closing control signal, and a wireless charging module configured to receive power from the portable device in a wireless manner and supply power for opening/closing the door of the vehicle when a battery for supplying power to the vehicle is discharged.

The communication unit may include a near-field communication (NFC) module.

The wireless charging module may receive minimum operating power for operating the communication unit, the control unit, and the door opening/closing module from the portable device.

The wireless charging module may operate in a power reception mode when power charged in the battery is less than or equal to the minimum operating power so as to receive the minimum operating power from the portable device.

According to an embodiment, there is provided a vehicle door opening/closing system including a portable device including a digital key, a communication unit configured to communicate with the portable device, a control unit configured to output an opening/closing control signal for controlling opening/closing of a door of a vehicle using a signal received from the portable device through the communication unit, a door opening/closing module configured to lock or unlock the door of the vehicle according to the opening/closing control signal, and a wireless charging module configured to receive power from the portable device in a wireless manner and supply power for opening/closing the door of the vehicle when a battery for supplying power to the vehicle is discharged.

The communication unit may include a near-field communication (NFC) module.

The wireless charging module may receive minimum operating power for operating the communication unit, the control unit, and the door opening/closing module from the portable device.

The wireless charging module may operate in a power reception mode when power charged in the battery is less than or equal to the minimum operating power so as to receive the minimum operating power from the portable device.

When an NFC search signal is not received from the vehicle within a preset distance, the portable device may be switched to a power transmission mode to transmit the minimum operating power to the portable device.

According to an embodiment, there is provided a vehicle door opening/closing system including a portable device which includes a digital key and operates in a power transmission mode when vehicle owner information matches portable device owner information, a wireless charging module configured to receive power from the portable device, which operates in the power transmission mode, in a wireless manner when a battery for supplying power to a vehicle is discharged, and a door opening/closing module configured to receive power from the wireless charging module and lock or unlock a door of the vehicle.

The portable device may determine whether the vehicle owner information matches the portable device owner information using at least one of ID/password information, biometric information, pattern information, personal identification number (PIN) information, public certificate authentication information, and short message service (SMS) authentication information.

The wireless charging module may receive minimum operating power for operating the door opening/closing module from the portable device.

The wireless charging module may operate in a power reception mode when power charged in the battery is less than or equal to the minimum operating power so as to receive the minimum operating power from the portable device.

[Advantageous Effects]

A vehicle door opening/closing device and system can supply minimum operating power required to control a vehicle using a portable device when a vehicle battery is discharged.

[Description of Drawings]

FIG. 1 is a conceptual diagram of an ultra-wideband (UWB) system according to an embodiment.

FIG. 2 is a view illustrating a communication process between a plurality of UWB devices.

FIG. 3 is a block diagram of a UWB device (10) according to the embodiment.

FIG. 4 illustrates a ranging process of a processor according to the embodiment.

FIG. 5 is a conceptual diagram illustrating a control system for opening and closing a door of a vehicle.

FIG. 6 is a conceptual diagram for describing the operation of a vehicle door opening/closing system according to an embodiment.

FIG. 7 is a block diagram of the vehicle door opening/closing system according to the embodiment.

FIGS. 8 and 9 are views for describing the operation of the vehicle door opening/closing system according to an embodiment.

FIG. 10 is a block diagram of a vehicle door opening/closing system according to another embodiment.

FIG. 11 is a view for describing the operation of the vehicle door opening/closing system according to another embodiment.

[Modes of the Invention]

Hereinafter, exemplary embodiments of the present invention will be described in detail with reference to the accompanying drawings.

However, the technical spirit of the present invention is not limited to any of the described embodiments, but may be implemented in various different forms, and one or more of the components among the embodiments may be used by being selectively coupled or substituted without departing from the scope of the technical spirit of the present invention.

In addition, terms (including technical and scientific terms) used in embodiments of the present invention may be construed with meanings that may be generally understood by those skilled in the art to which the present invention pertains unless explicitly specifically defined and described, and the meanings of commonly used terms, such as terms defined in a dictionary, may be construed in consideration of contextual meanings of related technologies.

In addition, the terms used in the embodiments of the present invention are for describing the embodiments and are not intended to limit the present invention.

In the specification, a singular form may include a plural form unless otherwise specified in the phrase, and when described as "at least one (or one or more) of A, B, and C," one or more among all possible combinations of A, B, and C may be included.

In addition, terms such as "first," "second," "A," "B," "(a)," "(b)," and the like may be used to describe components of the embodiments of the present invention.

These terms are only for the purpose of distinguishing one component from another component, and the nature, sequence, order, and the like of the corresponding components are not limited by these terms.

In addition, when a certain component is described as being "connected," "coupled," or "joined" to another component, it may include a case in which the certain component is directly connected, coupled, or joined to another component, but also a case in which the certain component is "connected," "coupled," or "joined" to another component by still another component present between the certain component and another component.

In addition, when a certain component is described as being formed or disposed on "on (above)" or "below (under)" another component, the terms "on (above)" or "below (under)" may include not only a case in which two components are in direct contact with each other, but also a case in which one or more other components are formed or disposed between the two components. In addition, when described as "on (above) or below (under)," it may include the meaning of not only an upward direction but also a downward direction based on one component.

Hereinafter, various embodiments will be described in detail with reference to the accompanying drawings, in which the same or corresponding components are denoted with the same reference numeral throughout the drawings, and overlapping descriptions thereof will be omitted.

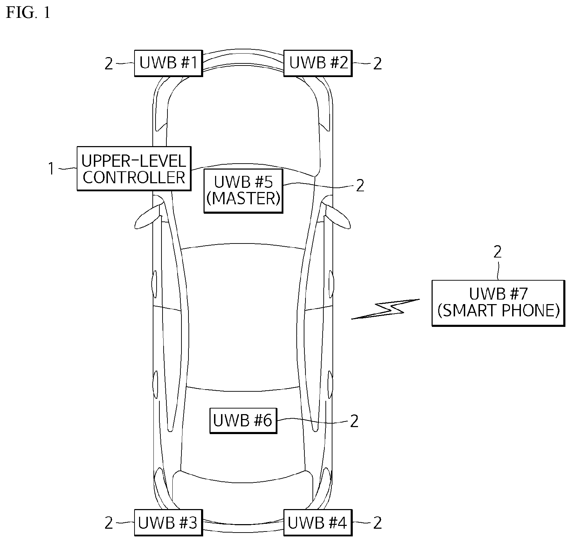

FIG. 1 is a conceptual diagram of an ultra-wideband (UWB) system according to an embodiment.

Referring to FIG. 1, in an embodiment, a plurality of UWB devices UWB#1 to #6, which perform UWB communication with a digital key UWB#7, may be mounted in a vehicle.

Mounting positions of the UWB devices UWB#1 to #6 may be determined, for example, according to UWB frequency characteristics. In an embodiment, two UWB devices may be mounted in a front bumper. Specifically, based on the viewpoint of a driver in the vehicle, the UWB device UWB#2 is mounted on a right side in the front bumper, and the UWB device UWB#1 is mounted on a left side in the front bumper.

Two UWB devices are mounted in a rear bumper. Specifically, based on the viewpoint of the driver, the UWB device UWB#4 is mounted on the right side inside the rear bumper, and the UWB device UWB#3 is mounted on a left side inside the rear bumper.

Two UWB devices are mounted on an interior roof (headlining) of the vehicle. Specifically, based on the viewpoint of the driver, the UWB device UWB#5 is mounted between a driver's seat and a passenger's seat, and the UWB device UWB#6 is mounted above a rear seat.

UWB may refer to a short-range, high-speed wireless communication technology that uses a wide frequency band of several GHz or more, a low spectral density, and a short pulse width (1 to 4 nsec) in a baseband mode. The UWB may refer to a band to which UWB communication is applied.

A UWB device 2 according to embodiments may include a fixed terminal implemented as a computer device or a mobile terminal and communicate with other devices and/or servers using a wireless or wired communication method. For example, the UWB device 2 may include a smartphone, a mobile terminal, a laptop computer, a digital broadcasting terminal, a personal digital assistant (PDA), a portable multimedia player (PMP), a navigation device, a slate PC, a tablet PC, a desktop computer, a digital TV, a refrigerator, an artificial intelligence speaker, a wearable device, a projector, a digital key, a smart car, a printer, a vehicle console, a control device for controlling at least some functions of the vehicle, etc., but is not limited thereto.

In an embodiment, a digital key or a smartphone and a UWB device installed in the vehicle will be described as examples.

The UWB device 2 according to the embodiment may perform device-to-device (D2D) communication. The D2D communication refers to a method in which geographically close devices communicate directly without any infrastructure, such as a base station. In the D2D communication, devices may communicate in a one-to-one, one-to-many, or many-to-many manner. The D2D communication may use unlicensed frequency bands, such as Wi-Fi Direct and Bluetooth. Alternatively, the D2D communication may use licensed frequency bands, thereby improving frequency utilization efficiency in cellular systems. Although the D2D communication is sometimes used in a limited sense to refer to communication between things or intelligent machine communication, the D2D communication according to the present embodiment may include communication not only between simple devices provided with communication functions, but also between various types of devices having a communication function, such as a smartphone or a personal computer.

In an embodiment, an upper-level controller 1 may determine positions of a plurality of UWB devices using ranging result values. The upper-level controller 1 may classify each UWB device 2 as one of a plurality of nodes and analyze a position of each UWB device 2 based on a distance relationship between the nodes. The upper-level controller 1 may set the plurality of UWB devices 2 mounted in the vehicle as anchor nodes and set the UWB device 2 mounted on the digital key as a tag node and determine the position of each UWB device 2 based on a distance relationship between the anchor node and the tag node.

In an embodiment, one of the plurality of UWB devices 2 mounted in the vehicle may be designated as a master UWB device UWB#5, and the upper-level controller 1 may be configured as a vehicle electronic control unit (ECU) or a body domain controller (BDC).

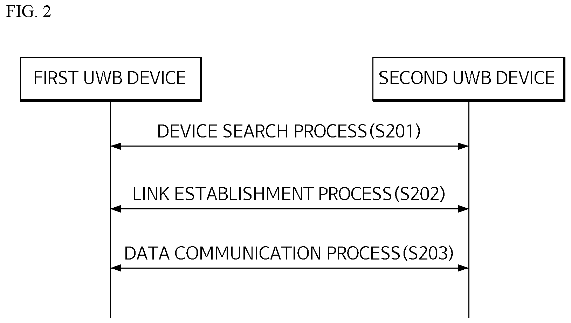

FIG. 2 is a view illustrating a communication process between a plurality of UWB devices.

A first UWB device and a second UWB device may communicate through a device search process, a link establishment process, and a data communication process.

During the device search process, each of the first UWB device and the second UWB device may search nearby UWB devices for other UWB devices capable of D2D communication. Accordingly, each of the first UWB device and the second UWB device may determine whether to establish a link for D2D communication. For example, the first UWB device may transmit a search signal to enable the second UWB device to search for the first UWB device. In addition, the first UWB device may receive the search signal transmitted by the second UWB device to determine that other electronic devices capable of D2D communication are detected within a D2D communication range (S201).

During the link establishment process, each of the first UWB device and the second UWB device may establish a link for data transmission with the UWB device to which data is transmitted among the found UWB devices during the device search process. For example, the first UWB device may establish a link for data transmission with the found second UWB device during the device search process (S202).

During the data communication process, each of the first UWB device and the second UWB device may transmit and receive data with UWB devices with which a link is established during the link establishment process. For example, the first UWB device may transmit and receive data with the second UWB device through the link established during the link establishment process (S203).

Various embodiments of the present application relate to medium access control (MAC) based on the D2D communication, and for MAC, a distance between UWB devices needs to be measured. In this case, a UWB ranging technology may be used to measure a distance between electronic devices.

In an embodiment, the ranging refers to measuring a distance between a UWB device (fob) and the other UWB device (anchor), a data structure complies with the IEEE802.15.4z standard, and about 200 $\mu$s may be required to transmit one packet.

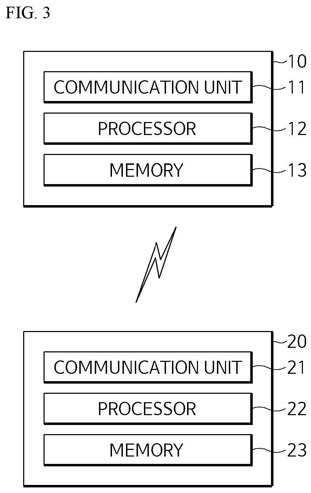

FIG. 3 is a block diagram of a UWB device 10 according to the embodiment. Referring to FIG. 3, the UWB device 10 according to the embodiment may perform ranging with the other UWB device 20 via UWB communication and include a communication unit 11, at least one processor 12, and a memory 13 having a built-in UWB ranging program. In addition, the other UWB device 20 may also include a communication unit 21, at least one processor 22, and a memory 23.

In an embodiment, the UWB device 10 is mounted in the vehicle and may serve as an anchor, and the other UWB device 20 is mounted on the digital key and may serve as a fob.

The communication unit 11 may perform data communication with the upper-level controller 1 to transmit ranging results and receive localization results from the upper-level controller 1. The communication unit 11 may perform data communication with the upper-level controller 1 via an L-controller area network (CAN) bus and transmit ranging results to the upper-level controller 1. In addition, the communication unit 11 may receive the localization results from the upper-level controller 1 via the L-CAN bus.

The processor 12 may perform ranging with the other UWB device 20 via the UWB communication and measure a distance to the other UWB device 20.

For example, when using a digital key stored on a smartphone to open or close a door of the vehicle, the vehicle may use a plurality of UWB devices 10 (e.g., eight UWB communication modules) to measure a distance between the smartphone and the vehicle and then estimate a position of the smartphone based on a result of measurement. The vehicle may automatically open the door of the vehicle when the smartphone is detected within a predetermined distance to the vehicle, thereby increasing user convenience. The vehicle and the smartphone may use multicast ranging or broadcast ranging.

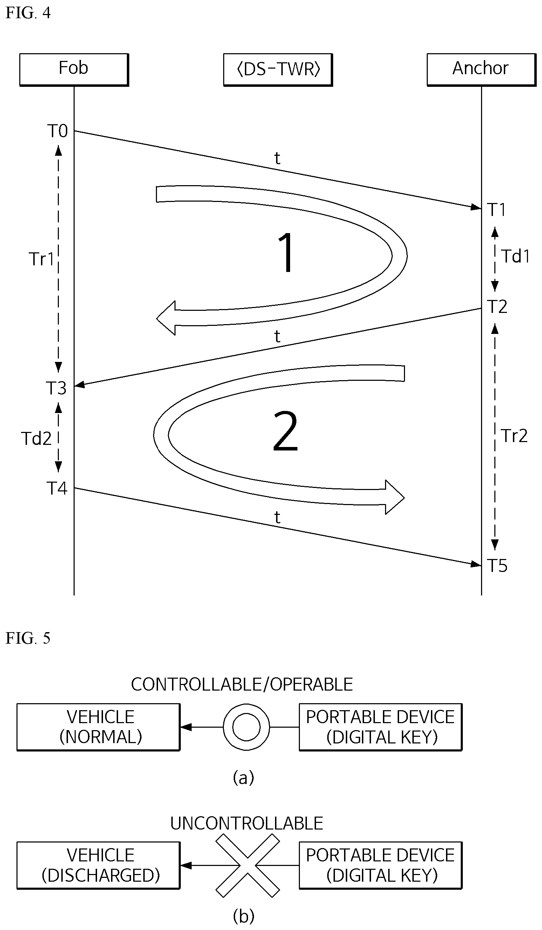

FIG. 4 illustrates a ranging process of a processor according to the embodiment.

FIG. 4 illustrates a two way ranging (TWR) method including a double sided (DS) TWR and a single sided (SS) TWR.

The ranging refers to measuring a distance between one fob and one anchor, a data structure complies with the IEEE802.15.4z standard, and about 200 microseconds ($\mu$s) may be required to transmit one packet.

In an embodiment, the UWB device 10 may operate as an anchor. When the UWB device 10 according to the embodiment operates as an anchor, the other UWB device 20 may operate as a fob.

A slot may be defined as a time required between one signal transmission (or reception) and a subsequent transmission (or reception) of a fob or anchor.

First, the fob transmits a poll packet and records a timestamp T0.

Next, the anchor receives the poll packet and records T1.

Next, the anchor receives a signal, spends a time Td1 to generate a response packet, transmits a response message, and records T2.

Next, the fob receives the response message and records T3.

Next, the fob receives the signal and spends a time Td2 to generate a final message.

Next, the fob transmits the final message and records T4, and the anchor receives the final message and records T5.

A distance value between the fob and the anchor may be calculated according to Equation 1 below.

[Equation 1]

$$R = C \times \frac{(T_{r1} - T_{d1}) - (T_{r2} - T_{d2})}{3}$$

(In Equation 1, R denotes a distance between a fob and an anchor, and C denotes the speed of light.)

FIG. 5 is a conceptual diagram illustrating a control system for opening and closing a door of a vehicle. Referring to FIG. 5A, using a UWB-based ranging technology, the control system may perform control operations, such as opening and closing vehicle doors, opening and closing a trunk, starting a vehicle, etc.

However, these operations are performed using a vehicle battery, and as illustrated in FIG. 5B, when the vehicle battery is discharged, communication with a portable device having a digital key is not possible, making the UWB-based ranging process impossible. In addition, in vehicles using a digital key and the absence of no physical key, the doors of the vehicle may not be manually opened when the vehicle battery is discharged, and thus it is difficult to take immediate measures to recharge the vehicle battery.

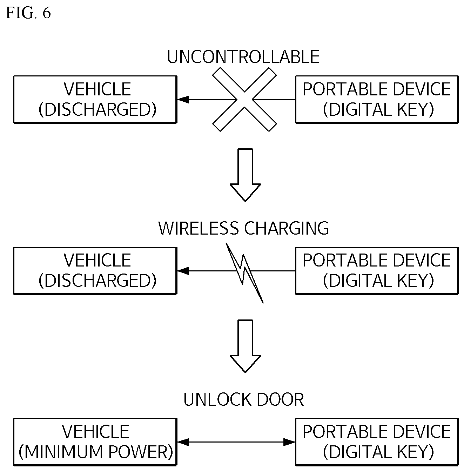

FIG. 6 is a conceptual diagram for describing the operation of a vehicle door opening/closing system according to an embodiment. Referring to FIG. 6, a vehicle door opening/closing system according to the embodiment may open vehicle doors by receiving minimum power required to control the opening and closing of the doors of the vehicle from a portable device when the vehicle battery is discharged.

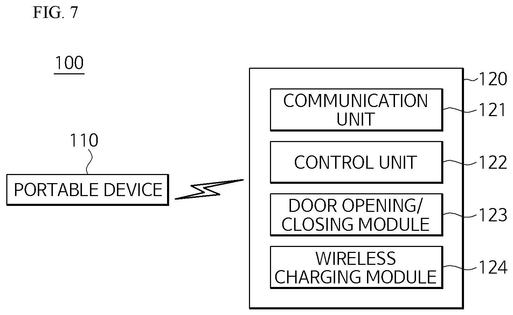

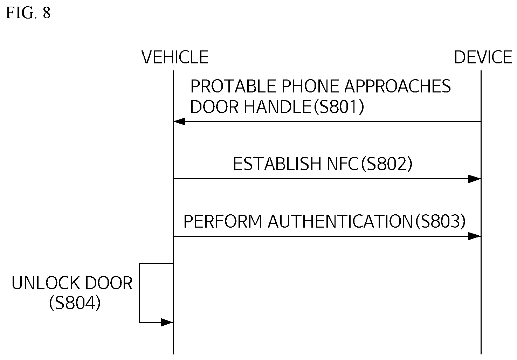

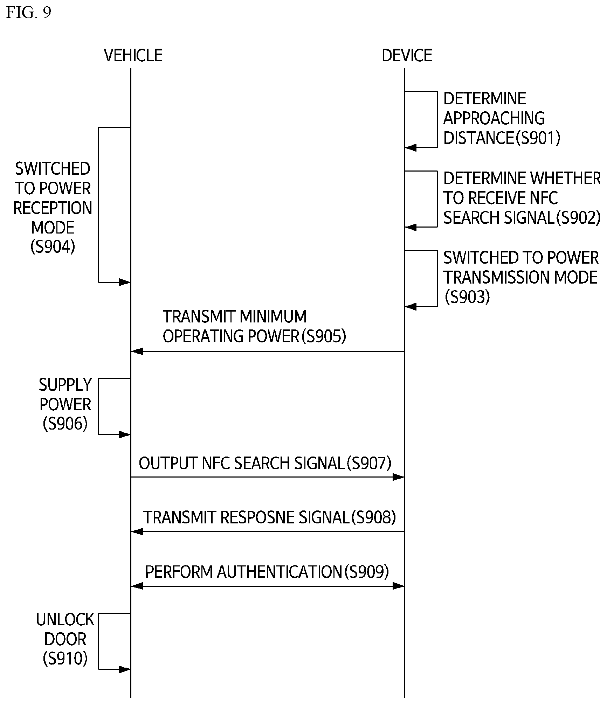

FIG. 7 is a block diagram of the vehicle door opening/closing system according to the embodiment, and FIGS. 8 and 9 are views for describing the operation of the vehicle door opening/closing system according to an embodiment.

Referring to FIG. 7, a vehicle door opening/closing system 100 according to the embodiment may include a portable device 110, a communication unit 121, a control unit 122, a door opening/closing module 123, and a wireless charging module 124. The communication unit 121, the control unit 122, the door opening/closing module 123, and the wireless charging module 124 constitute a vehicle door opening/closing device 120, which may be mounted on a vehicle.

In the vehicle door opening/closing system according to the embodiment, a locked state of the vehicle door opening/closing module 123 is changed when it is detected that the portable device 110 having a predetermined code in a near-field communication (NFC) chip and a memory device is disposed inside a transmission/reception area of an NFC control device integrated with the vehicle. The NFC control device may be integrated, for example, with an area of a vehicle external door handle, but a door handle is not necessarily needed, and an NFC control device used as an NFC reader may be integrated with a B-pillar or a windshield.

The portable device 110 may be, for example, a smartphone, a conventional mobile phone, a smartwatch, or a smart card. Generally, any NFC-enabled terminal having a safe storage and execution environment, a so-called security element may be used. For example, a fitness bracelet may also be used. When the portable device 110 is, for example, a smartphone, the user does not need to carry a vehicle key to operate the vehicle door opening/closing system. Instead, the user may unlock the door of the vehicle by carrying the portable device 110 and positioning the portable device 110 in the transmitting/receiving area of the NFC control device integrated with the external door area of the vehicle.

Through such an operation, NFC connection may be established between the NFC chip integrated with the portable device 110 and the NFC control device. Thereafter, the NFC chip and the NFC control device may perform authentication; for example, a code stored in the memory of the portable device 110 may be exchanged. Upon initial vehicle access, no code is exchanged, and a challenge-response authentication process based on a shared password or a code using symmetric encryption may be performed. Alternatively, an asymmetric encryption method may be applied. Additional or different codes applied upon vehicle startup may be transmitted in encrypted form.

The memory device may refer to a security element, that is, a tamper-resistant platform for storing data. Once the corresponding user's authorization is confirmed by the exchanged code, the locked state of the vehicle door opening/closing system may be changed. That is, depending on whether the vehicle door opening/closing system is locked or unlocked, the vehicle door opening/closing system may be locked or unlocked. That is, when the vehicle is locked by the user bringing an NFC-enabled terminal (e.g., the portable device 110) into close contact with the vehicle door handle, the vehicle is unlocked, and vice versa.

Specifically, the vehicle may transition to another state among three states depending on the NFC contact operation. For example, the vehicle is locked by a locking system in a first state. The vehicle may include a first NFC control device in the area of the external door handle. In addition, the vehicle may include an additional NFC control device inside the vehicle, and the control device may be disposed below an inductive charging field. In addition, the vehicle may further include a control device for operating the vehicle. In this case, the control device may be signal-technically connected to two NFC control devices. Furthermore, the control device is signally and technically connected to a vehicle door opening/closing system.

In a second state, NFC communication is established between the portable device 110 and the NFC control device integrated with the area of the vehicle external door handle. The portable device 110 may include a predetermined code in the NFC chip and the memory device.

The user wishing to unlock a door of the vehicle needs to bring the portable device 110 into proximity with the transmitting/receiving area of the NFC control device to establish communication between the portable device 110 and the NFC control device. During communication, the codes stored in the memory device of the portable device 110 may be exchanged. Once the code is verified, the vehicle in the first state may be unlocked by control corresponding to the locking system using the control unit, and the vehicle may be operated without the need to pre-operate the vehicle key as in the related art. In a third state, the vehicle may be maintained in an unlocked state.

To lock and unlock the vehicle, the user does not need to be in direct contact with the vehicle door handle to establish communication between the NFC chip in the portable device 110 and the NFC control device integrated with the area of the vehicle external door handle. The user only needs to bring the portable device 110 into proximity with the NFC control device, for example, within 10 cm, to establish communication between the NFC chip in the portable device 110 and the NFC control device.

In this case, the communication unit 121 may periodically transmit an NFC signal (NFC search signal) to search for an authenticated portable device 110 in the vicinity of the vehicle.

The control unit 122 may transmit the NFC search signal a set number of times through the communication unit 121 and search for the portable device 110 during the process of transmitting the NFC search signal the set number of times.

The NFC communication is established within a range of 10 cm, and the periodic output of the NFC search signal is for a vehicle door control function, and since the NFC communication is established when the user approaches the vehicle and attempts to control the door, a fast response thereto is required.

A process of controlling the opening and closing of a door of a vehicle using NFC will be described with reference to FIG. 8. In FIG. 8, it is assumed that the initial state of the vehicle is a state in which the door of the vehicle is locked and a user attempts to unlock the door of the vehicle.

In FIG. 8, among components of the vehicle door opening/closing system, the communication unit 121, the control unit 122, the door opening/closing module 123, and the wireless charging module 124 may be mounted and operated in the vehicle.

The vehicle periodically transmits an NFC search signal based on an NFC transmission cycle to determine the presence of the portable device 110 in the vicinity of the vehicle. The vehicle may transmit an NFC search signal via NFC communication according to a set NFC transmission cycle and count the number of transmissions of the NFC search signal.

When the portable device 110 is positioned within a distance at which communication with the vehicle is possible and receives the NFC search signal, the portable device 110 transmits a response signal including an ID to the NFC vehicle according to the received NFC search signal.

When receiving the response signal, the vehicle compares the ID included in the response signal with a preset ID to perform authentication for the portable device 110.

When the authentication of the portable device 110 is successful, the vehicle transmits a door control signal to a motor driving unit to unlock the door of the vehicle. Specifically, the door opening/closing module 123 transmits the door control signal to the motor driving unit via CAN communication.

On the other hand, when the authentication for the portable device 110 fails, the vehicle may retransmit the NFC search signal to the portable device 110 for re-authentication.

The portable device 110 may include a digital key. When the portable device 110 does not receive the NFC search signal within a preset distance to the vehicle, the portable device 110 may be switched to a power transmission mode to transmit minimum operating power. The preset distance may be, for example, 10 cm.

The portable device 110 may determine a distance to the vehicle using a built-in GPS. When receiving the NFC search signal within the preset distance, the portable device 110 may perform an authentication process to unlock the door of the vehicle as described above. However, when the NFC search signal is not received within the preset distance, the portable device 110 may determine that the vehicle battery is discharged and may be switched to the power transmission mode for transmitting wireless power.

In this case, the power transmission mode may be switched automatically or after user confirmation through a user interface of the portable device 110. The portable device 110 switched to the power transmission mode may output a visual or auditory signal to transmit the minimum operating power to guide the movement of the portable device 110 to a position of the vehicle at which the wireless charging module 124 is mounted. The portable device 110 in contact with the wireless charging module 124 of the vehicle in the power transmission mode may transmit the minimum operating power to the wireless charging module 124 of the vehicle through a built-in wireless power transmission coil and transmission antenna. The transmission coil of the portable device 110 may transmit a detection signal to a wireless power reception device or reception antenna to detect the presence of the wireless power reception device or reception antenna, and the transmission antenna may transmit power in a wireless manner when detecting the wireless power reception device or reception antenna.

The minimum operating power may refer to a minimum amount of power required for operating the communication unit 121, the control unit 122, and the door opening/closing module 123 of the vehicle and unlocking the door of the vehicle. In this case, the minimum operating power may refer to a preset power amount according to vehicle specifications. Alternatively, the portable device 110 may complete the charging operation by receiving the NFC search signal from the communication unit 121 of the vehicle while transmitting power to the wireless charging module 124 of the vehicle. Alternatively, the portable device 110 may complete the charging operation by receiving a vehicle door unlock completion signal from the communication unit 121 of the vehicle while transmitting power to the wireless charging module 124 of the vehicle.

The communication unit 121 may communicate with the portable device 110. The communication unit 121 may include an NFC module. The communication unit 121 may periodically output the NFC search signal under the control of the control unit 122. In addition, when the door of the vehicle is unlocked, the communication unit 121 may transmit the vehicle door unlock completion signal to the portable device 110.

The control unit 122 may output an opening/-closing control signal for controlling the opening/closing of the door of the vehicle using a signal received from the portable device 110 through the communication unit 121. NFC connection may be established between the NFC chip integrated in the portable device 110 and the NFC control device mounted on the vehicle through the NFC search signal output from the communication unit 121 and the corresponding response signal. Thereafter, the NFC chip and the NFC control device may perform authentication. For example, the codes stored in the memory device of the portable device 110 may be exchanged. Upon initial vehicle access, no code is exchanged, and a challenge-response authentication process based on a shared password or a code using symmetric encryption may be performed. Alternatively, an asymmetric encryption method may be applied. Additional or different codes applied upon vehicle startup may be transmitted in encrypted form. Once the corresponding user is authorized by the exchanged code, the locked state of the vehicle door opening/closing system may be changed. That is, depending on whether the vehicle door opening/closing system is locked or unlocked, the vehicle door opening/closing system may be locked or unlocked.

The door opening/closing module 123 may lock or unlock the door of the vehicle according to the opening/closing control signal. When the authentication for the portable device 110 is successful, the door opening/closing module 123 may transmit a door control signal to the motor driving unit to unlock the door of the vehicle. Specifically, the door opening/closing module 123 may transmit the door control signal to the motor driving unit via CAN communication.

The wireless charging module 124 may receive power from the portable device 110 in a wireless manner when the battery for supplying power to the vehicle is discharged and supply power for opening and closing the door of the vehicle. The wireless charging module 124 may include an antenna for receiving power from an external source in a wireless manner.

The wireless charging module 124 may receive the minimum operating power for operating the communication unit 121, the control unit 122, and the door opening/closing module 123 from the portable device 110. When the power charged in the battery is less than or equal to the minimum operating power, the wireless charging module 124 may operate in a power reception mode to receive the minimum operating power from the portable device 110. The wireless charging module 124 may operate in the power reception mode or may be switched to the power reception mode under the control of the control unit 122.

That is, the control unit 122 may detect a state of charge (SOC) of the vehicle battery, and when a charge level of the vehicle battery is less than or equal to a preset value, the control unit 122 may determine that the vehicle battery is discharged. When the vehicle battery is discharged, the control unit 122 may output a control signal to switch the wireless charging module 124 to the power reception mode.

When receiving power from the portable device 110, the wireless charging module 124 may supply power to the communication unit 121, the control unit 122, and the door opening/closing module 123. Accordingly, power charged through the portable device 110 may be directly supplied to components for opening and closing the door of the vehicle to unlock the door of the vehicle without charging the battery.

Referring to FIG. 8, first, the communication unit uses the power received from the wireless charging module to output the NFC search signal to the portable device (S801).

Next, the portable device transmits a response signal to the NFC search signal to the communication unit to establish NFC connection between the NFC chip integrated with the portable device and the NFC control unit mounted on the vehicle (S802).

Next, an authentication process is performed through code exchange between the NFC chip integrated with the portable device and the NFC control unit mounted on the vehicle (S803).

When the authentication is completed, the door opening/closing module transmits the door control signal to the motor driving unit to unlock the door of the vehicle (S804).

Referring to FIG. 9, first, the portable device determines whether it approaches within a preset distance to the vehicle (S901).

Next, when the portable device does not receive the NFC search signal from the communication unit of the vehicle within the preset distance, the portable device is switched to the power transmission mode (S902 and S903).

Simultaneously or sequentially, the wireless charging module operates in the power reception mode when the power charged in the battery is less than or equal to the minimum operating power (S904).

Next, the wireless charging module receives the minimum operating power from the portable device. In this case, the portable device may output the visual or auditory signal to guide movement of the portable device to the position of the vehicle at which the wireless charging module is mounted (S905).

Next, the wireless charging module supplies the minimum operating power received from the portable device to the communication unit, the control unit, and the door opening/closing module (S906).

Next, the communication unit uses the power received from the wireless charging module to output the NFC search signal to the portable device (S907).

Next, the portable device transmits a response signal to the NFC search signal to the communication unit to establish NFC connection between the NFC chip integrated with the portable device and the NFC control unit mounted on the vehicle (S908).

Next, an authentication process is performed through code exchange between the NFC chip integrated with the portable device and the NFC control unit mounted on the vehicle (S909).

When the authentication is completed, the door opening/closing module transmits the door control signal to the motor driving unit to unlock the door of the vehicle (S910).

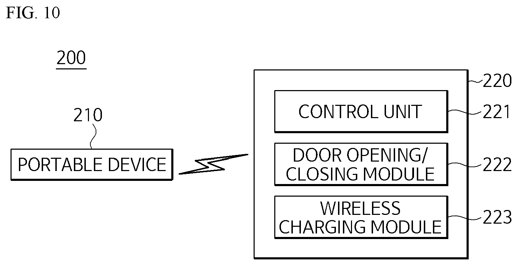

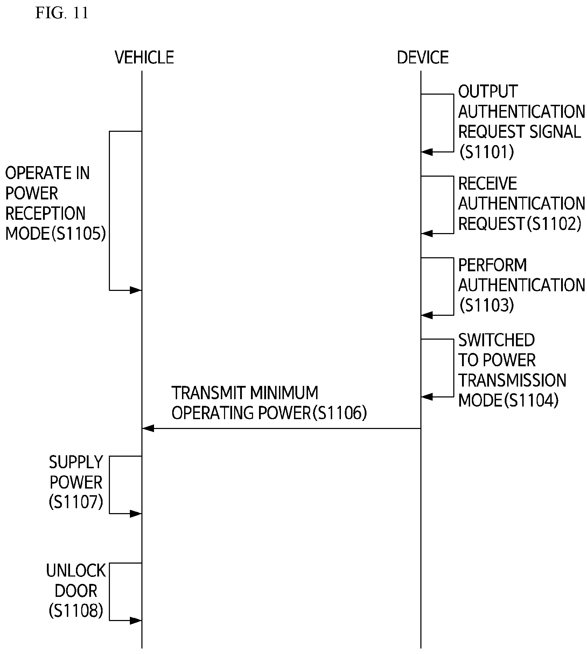

FIG. 10 is a block diagram of a vehicle door opening/closing system according to another embodiment, and FIG. 11 is a view for describing the operation of the vehicle door opening/closing system according to another embodiment.

Referring to FIG. 10, a vehicle door opening/-closing system 200 according to the embodiment may include a portable device 210, a control unit 221, a door opening/closing module 222, and a wireless charging module 223. The control unit 221, the door opening/closing module 222, and the wireless charging module 223 may constitute the vehicle door opening/closing device 220, which may be mounted on the vehicle.

The portable device 210 may include a digital key.

The portable device 210 may determine whether vehicle owner information matches owner information of the portable device 20 using at least one of ID/password information, biometric information, pattern information, personal identification number (PIN) information, public certificate authentication information, and short message service (SMS) authentication information.

When receiving a user command through the user interface, the portable device 210 may output an authentication request signal to determine whether the vehicle owner information matches owner information of the portable device 210. Alternatively, when the NFC search signal is not received from the vehicle within the preset distance, the portable device 210 may output the authentication request signal.

The authentication request signal may be output visually or audibly through the user interface of the portable device 210. When receiving at least one of the ID/password information, biometric information, pattern information, PIN information, public certificate authentication information, and SMS authentication information of the user according to the authentication request signal, the portable device 210 may determine whether the vehicle owner information stored on an external server or internally matches owner information of the portable device 210.

The portable device 210 may operate in the power transmission mode when the vehicle owner information matches owner information of the portable device 210.

The portable device 210 switched to the power transmission mode may output a visual or auditory signal to transmit the minimum operating power to guide the movement of the portable device 210 to a position of the vehicle at which the wireless charging module 213 is mounted. The portable device 210 in contact with the wireless charging module 213 of the vehicle in the power transmission mode may transmit the minimum operating power to the wireless charging module 213 of the vehicle through a built-in wireless power transmission coil and transmission antenna. The transmission coil of the portable device 210 may transmit a detection signal to a wireless power reception device or reception antenna to detect the presence of the wireless power reception device or reception antenna, and the transmission antenna may transmit power in a wireless manner when detecting the wireless power reception device or reception antenna.

The control unit 221 may output an opening/-closing control signal to control the opening and closing of the door of the vehicle.

The door opening/closing module 222 may lock or unlock the door of the vehicle according to the opening/closing control signal.

The control unit 221 may detect the SOC of the vehicle battery, and when the charge level of the vehicle battery is less than or equal to the preset value, the control unit 122 may determine that the vehicle battery is discharged. When the vehicle battery is discharged, the control unit 221 may output the control signal to switch the wireless charging module 223 to the power reception mode.

When receiving power from the wireless charging module 223 in a state in which the vehicle battery is discharged, the control unit 221 may use the received power to output the opening/closing control signal to the door opening/closing module 212 to unlock the door of the vehicle.

The door opening/closing module 222 may unlock the door of the vehicle by transmitting the door control signal to the motor driving unit according to the opening/closing control signal. Specifically, the door opening/closing module 222 may transmit the door control signal to the motor driving unit via CAN communication.

The wireless charging module 223 may receive power from the portable device 210 operating in the power transmission mode in a wireless manner when the battery for supplying power to the vehicle is discharged, thereby charging the battery. The wireless charging module 223 may include an antenna for receiving power from an external source in a wireless manner.

The wireless charging module 223 may receive the minimum operating power for operating the control unit 221 and the door opening/closing module 222 from the portable device 210.

When the power charged in the battery is less than or equal to the minimum operating power, the wireless charging module 223 may operate in a power reception mode to receive the minimum operating power from the portable device 210.

When the power charged in the battery is less than or equal to the minimum operating power, the wireless charging module 223 may operate in a power reception mode to receive the minimum operating power from the portable device 210. The wireless charging module 223 may operate in the power reception mode or may be switched to the power reception mode under the control of the control unit 211.

When receiving power from the portable device 210, the wireless charging module 223 may supply power to the control unit 221 and the door opening/closing module 222. Accordingly, power charged through the portable device 210 may be directly supplied to components for opening and closing the door of the vehicle to unlock the door of the vehicle without charging the battery.

According to an embodiment, the door of the vehicle may be unlocked immediately by receiving the minimum amount of power required to operate the control unit 221 and the door opening/closing module 222 from the portable device 210 in a state in which an NFC communication unit is not provided or a state in which an NFC authentication process is omitted. When receiving power from the wireless charging module 213 in a state in which the vehicle battery is discharged, the control unit 221 may output an unlock signal so that the door of the vehicle may be unlocked immediately without a separate authentication process. In this case, since the authentication process between the portable device 210 and the vehicle owner has already been completed through the portable device 210, the control unit 221 may unlock the door of the vehicle immediately without a separate authentication process. Accordingly, power consumption during the authentication process can be prevented, and compared to the embodiment operating via NFC, the vehicle can be unlocked using relatively less power.

Referring to FIG. 11, first, the portable device outputs an authentication request signal when receiving a user command through the user interface (S1101).

Next, in response to the authentication request signal, the portable device receives at least one of ID/password information, biometric information, pattern information, PIN information, public certificate authentication information, and SMS authentication information of a user (S1102).

Next, the portable device determines whether the vehicle owner information stored on an external server or internally matches the portable device owner information (S1103).

Next, when the vehicle owner information and the portable device owner information match, the portable device operates in power transmission mode (S1104).

Simultaneously or sequentially, the wireless charging module operates in the power reception mode when the power charged in the battery is less than or equal to the minimum operating power (S1105).

Next, the wireless charging module receives the minimum operating power from the portable device. In this case, the portable device may output the visual or auditory signal to guide movement of the portable device to the position of the vehicle at which the wireless charging module is mounted (S1106).

Next, the wireless charging module supplies the minimum operating power received from the portable device to the control unit and the door opening/closing module (S1107).

Next, the door opening/closing module transmits the door control signal to the motor driving unit to unlock the door of the vehicle (S1108).

The term "unit" used in the present embodiment means a software or hardware component such as a field programmable gate array (FPGA) or an application specific integrated circuit (ASIC), and the "unit" performs certain roles. However, the "unit" is not limited to software or hardware. The "unit" may be disposed in an addressable storage medium and configured to reproduce one or more processors. Accordingly, as an example, the "unit" includes components such as software components, object-oriented software components, class components, and task components, processes, functions, attributes, procedures, subroutines, segments of program code, drivers, firmware, microcode, circuits, data, databases, data structures, tables, arrays, and variables. Functions provided in the components and "units" may be combined into a smaller number of components and "units" or separated into additional components and "units." Additionally, the components and "units" may be implemented to reproduce one or more CPUs in a device or a security multimedia card.

Although the present invention has been described above with reference to various exemplary embodiments, those skilled in the art will understand that the present invention may be modified and changed variously without departing from the spirit and scope of the present invention as described in the appended claims.

**Claims**

1. A vehicle door opening/closing device comprising:

    a communication unit configured to communicate with a portable device including a digital key;
    a control unit configured to output an opening/closing control signal for controlling opening/closing of a door of a vehicle using a signal received from the portable device through the communication unit;

a door opening/closing module configured to lock or unlock the door of the vehicle according to the opening/closing control signal; and

a wireless charging module configured to receive power from the portable device in a wireless manner and supply power for opening/closing the door of the vehicle when a battery for supplying power to the vehicle is discharged.

2. The vehicle door opening/closing device of claim 1, wherein the communication unit includes a near-field communication (NFC) module.

3. The vehicle door opening/closing device of claim 2, wherein the wireless charging module receives minimum operating power for operating the communication unit, the control unit, and the door opening/closing module from the portable device.

4. The vehicle door opening/closing device of claim 3, wherein the wireless charging module operates in a power reception mode when power charged in the battery is less than or equal to the minimum operating power so as to receive the minimum operating power from the portable device.

5. A vehicle door opening/closing system comprising:

a portable device including a digital key;

a communication unit configured to communicate with the portable device;

a control unit configured to output an opening/closing control signal for controlling opening/closing of a door of a vehicle using a signal received from the portable device through the communication unit;

a door opening/closing module configured to lock or unlock the door of the vehicle according to the opening/closing control signal; and

a wireless charging module configured to receive power from the portable device in a wireless manner and supply power for opening/closing the door of the vehicle when a battery for supplying power to the vehicle is discharged.

6. The vehicle door opening/closing system of claim 5, wherein the communication unit includes a near-field communication (NFC) module.

7. The vehicle door opening/closing system of claim 6, wherein the wireless charging module receives minimum operating power for operating the communication unit, the control unit, and the door opening/closing module from the portable device.

8. The vehicle door opening/closing system of claim 7, wherein the wireless charging module operates in a power reception mode when power charged in the battery is less than or equal to the minimum operating power so as to receive the minimum operating power from the portable device.

9. The vehicle door opening/closing system of claim 8, wherein, when an NFC search signal is not received from the vehicle within a preset distance, the portable device is switched to a power transmission mode and transmits the minimum operating power to the portable device.

10. A vehicle door opening/closing system comprising:

a portable device which includes a digital key and operates in a power transmission mode when vehicle owner information matches portable device owner information;

a wireless charging module configured to receive power from the portable device, which operates in the power transmission mode, in a wireless manner when a battery for supplying power to a vehicle is discharged; and

a door opening/closing module configured to receive power from the wireless charging module and lock or unlock a door of the vehicle.

11. The vehicle door opening/closing system of claim 10, wherein the portable device determines whether the vehicle owner information matches the portable device owner information using at least one of ID/password information, biometric information, pattern information, personal identification number (PIN) information, public certificate authentication information, and short message service (SMS) authentication information.

12. The vehicle door opening/closing system of claim 10, wherein the wireless charging module receives minimum operating power for operating the door opening/closing module from the portable device.

13. The vehicle door opening/closing system of claim 12, wherein the wireless charging module operates in a power reception mode when power charged in the battery is less than or equal to the minimum operating power so as to receive the minimum operating power from the portable device.

FIG. 1

FIG. 2

```
┌──────────────────┐                    ┌─────────────────────┐
│  FIRST UWB DEVICE │                    │  SECOND UWB DEVICE  │
└────────┬─────────┘                    └──────────┬──────────┘
         │        DEVICE SEARCH PROCESS (S201)      │
         │◄───────────────────────────────────────►│
         │                                          │
         │      LINK ESTABLISHMENT PROCESS (S202)    │
         │◄───────────────────────────────────────►│
         │                                          │
         │     DATA COMMUNICATION PROCESS (S203)     │
         │◄───────────────────────────────────────►│
         │                                          │
```

FIG. 3

FIG. 4

FIG. 5

FIG. 6

UNCONTROLLABLE

```
┌──────────────────┐      ╲╱      ┌──────────────────┐
│     VEHICLE      │ ◄──  ╱╲  ──  │ PORTABLE DEVICE  │
│   (DISCHARGED)   │      ╱╲      │  (DIGITAL KEY)   │
└──────────────────┘              └──────────────────┘
```

WIRELESS CHARGING

```
┌──────────────────┐              ┌──────────────────┐
│     VEHICLE      │ ◄──  ⚡  ──  │ PORTABLE DEVICE  │
│   (DISCHARGED)   │              │  (DIGITAL KEY)   │
└──────────────────┘              └──────────────────┘
```

UNLOCK DOOR

```
┌──────────────────┐              ┌──────────────────┐
│     VEHICLE      │ ◄─────────►  │ PORTABLE DEVICE  │
│ (MINIMUM POWER)  │              │  (DIGITAL KEY)   │
└──────────────────┘              └──────────────────┘
```

FIG. 7

FIG. 8

VEHICLE             DEVICE

PROTABLE PHONE APPROACHES
DOOR HANDLE(S801)

ESTABLISH NFC(S802)

PERFORM AUTHENTICATION(S803)

UNLOCK DOOR
(S804)

FIG. 9

FIG. 10

200

210

PORTABLE DEVICE

CONTROL UNIT — 221

DOOR OPENING/ CLOSING MODULE — 222

WIRELESS CHARGING MODULE — 223

220

FIG. 11

## INTERNATIONAL SEARCH REPORT

| International application No. |
| --- |
| **PCT/KR2024/009286** |

| A. | CLASSIFICATION OF SUBJECT MATTER |
| --- | --- |

**B60R 25/40**(2013.01)i; **B60R 25/01**(2013.01)i; **B60R 25/24**(2013.01)i

According to International Patent Classification (IPC) or to both national classification and IPC

| B. | FIELDS SEARCHED |
| --- | --- |

Minimum documentation searched (classification system followed by classification symbols)

B60R 25/40(2013.01); B60R 25/00(2006.01); B60R 25/24(2013.01); E05B 49/00(2006.01); E05B 81/16(2014.01); E05B 81/80(2014.01); G07C 9/00(2006.01); H04M 1/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 차량(vehicle), 도어(door), 통신(communication), 스마트 키(smart key), 휴대장치 (mobile device), 무선 충전(wireless charging)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2005-314962 A (TOYOTA MOTOR CORP.) 10 November 2005 (2005-11-10)<br>See paragraphs [0026]-[0032], [0034], [0038] and [0056] and figure 1. | 1-13 |
| X | KR 10-2014-0144174 A (ADAC PLASTICS, INC. et al.) 18 December 2014 (2014-12-18)<br>See paragraphs [0016]-[0033] and figures 2, 5 and 5a. | 1-13 |
| X | KR 10-2020-0133364 A (BROSE FAHRZEUGTEILE SE & CO. KOMMANDITGESELLSCHAFT, BAMBERG) 27 November 2020 (2020-11-27)<br>See paragraph [0040], claims 1, 4, 6-8 and 11 and figures 1 and 2. | 1-13 |
| A | US 2023-0219523 A1 (CONTINENTAL AUTOMOTIVE TECHNOLOGIES G.M.B.H.) 13 July 2023 (2023-07-13)<br>See paragraphs [0039]-[0045] and figure 3. | 1-13 |
| A | JP 2014-190047 A (TOKAI RIKA CO., LTD.) 06 October 2014 (2014-10-06)<br>See claims 1 and 3 and figure 1. | 1-13 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **15 October 2024** | **16 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/009286**

| Patent document cited in search report | | | Publication date (day/month/year) | Patent family member(s) | | | Publication date (day/month/year) |
|---|---|---|---|---|---|---|---|
| JP | 2005-314962 | A | 10 November 2005 | JP | 4461896 | B2 | 12 May 2010 |
| KR | 10-2014-0144174 | A | 18 December 2014 | CN | 104245443 | A | 24 December 2014 |
| | | | | CN | 104245443 | B | 24 August 2016 |
| | | | | CN | 104395153 | A | 04 March 2015 |
| | | | | DE | 112013000497 | T5 | 24 December 2014 |
| | | | | DE | 112013000497 | T8 | 15 January 2015 |
| | | | | DE | 112013000504 | T5 | 02 October 2014 |
| | | | | KR | 10-2015-0000471 | A | 02 January 2015 |
| | | | | US | 2014-0316612 | A1 | 23 October 2014 |
| | | | | US | 2014-0347163 | A1 | 27 November 2014 |
| | | | | WO | 2013-103953 | A1 | 11 July 2013 |
| | | | | WO | 2014-081451 | A2 | 30 May 2014 |
| | | | | WO | 2014-081451 | A3 | 16 October 2014 |
| | | | | WO | 2014-081451 | A9 | 17 July 2014 |
| KR | 10-2020-0133364 | A | 27 November 2020 | CN | 112004980 | A | 27 November 2020 |
| | | | | DE | 102018106410 | A1 | 19 September 2019 |
| | | | | EP | 3768923 | A1 | 27 January 2021 |
| | | | | JP | 2021-518499 | A | 02 August 2021 |
| | | | | US | 2021-0363789 | A1 | 25 November 2021 |
| | | | | WO | 2019-179910 | A1 | 26 September 2019 |
| US | 2023-0219523 | A1 | 13 July 2023 | DE | 102020207097 | A1 | 09 December 2021 |
| | | | | EP | 4161808 | A1 | 12 April 2023 |
| | | | | EP | 4161808 | B1 | 01 May 2024 |
| | | | | WO | 2021-244712 | A1 | 09 December 2021 |
| JP | 2014-190047 | A | 06 October 2014 | JP | 5969420 | B2 | 17 August 2016 |

Form PCT/ISA/210 (patent family annex) (July 2022)